# EUROPÄISCHE PATENTSCHRIFT

(11) **EP 3 556 090 B1**
(45) Veröffentlichungstag und Bekanntmachung des Hinweises auf die Patenterteilung: **13.08.2025**
(21) Anmeldenummer: 17797047.2
(22) Anmeldetag: 14.09.2017
(51) Int. Cl.: H04N 7/18

(54) **DREIDIMENSIONALES RUNDUMSICHTSYSTEM**
THREE-DIMENSIONAL ALL-ROUND VIEW SYSTEM
SYSTÈME DE VUE PANORAMIQUE EN TROIS DIMENSIONS

(30) Priorität: 14.12.2016 DE 102016224904
(43) Veröffentlichungstag der Anmeldung: 23.10.2019
(73) Patentinhaber: AUMOVIO Autonomous Mobility Germany GmbH, 85057 Ingolstadt (DE)
(72) Erfinder: PETZOLD, Johannes, 95326 Kulmbach (DE); FRIEBE, Markus, 95482 Gefrees (DE); SIMON, Martin, 98593 Floh-Seligental (DE); SCHREPFER, Jörg, 96355 Tettau (DE); DHANA SEKARAN, Sudhan, 90411 Nürnberg (DE); GARCIA MARQUES, Rodrigo, 90411 Nèrnberg (DE)
(74) Vertreter: Aumovio Corporation
(86) Internationale Anmeldenummer: PCT/DE2017/200093
(87) Internationale Veröffentlichungsnummer: WO 2018/108211

(56) Entgegenhaltungen:
- WO-A1-2016/026870
- JP-A- 2012 105 158
- US-A1- 2014 085 472

## Beschreibung

Die Erfindung betrifft ein dreidimensionales Rundumsichtsystem für ein Gespann aus einem Fahrzeug und einem Anhänger, wobei der Anhänger mittels einer geraden Zugstange zumindest um eine Hochachse des Fahrzeugs gelenkig an dem Fahrzeug befestigt ist.

Aus der US 2012/0262580 A1 ist ein Rundumsichtsystem bekannt, welches eine Rundumsicht eines Fahrzeugs mittels z.B. vier Kameras bereitstellen kann, welche an unterschiedlichen Positionen an dem Fahrzeug positioniert sind. Die Kameras können Bilddaten generieren, welche mit der Rundumsicht korrespondieren, und eine Verarbeitungsvorrichtung kann die Bilddaten verarbeiten und die Rundumsicht auf einer simulierten vorbestimmten Form generieren, die auf einem Display betrachtet werden kann. Die simulierte vorbestimmte Form kann beispielsweise eine Schalenform sein.

In WO 2016/026870 A1 wird ein Anzeigesystem zum Erzeugen eines zusammengesetzten Bildes eines Bereichs hinter einem Fahrzeug, das einen Anhänger zieht, beschrieben. Dabei wird ein erstes Bild einer ersten Kamera, welche an einer Rückseite des Fahrzeugs angeordnet ist, mit einem zweiten Bild einer an einer Rückseite des Anhänger angeordneten zweiten Kamera ergänzt. Mittels eines Bildprozessors werden das erste Bild und das zweite Bild zusammengefügt, wobei der in dem ersten Bild von dem Anhänger verdeckte Umgebungsbereich mit Hilfe des zweiten Bildes dargestellt wird.

In US 2014/0085472 A1 und JP 2012/105158 A1 werden jeweils Vorrichtungen beschrieben, welche aus mehreren an einem Zugfahrzeug und einem Anhänger angeordneten Kameras eine Fahrzeugumgebungsdarstellung aus einer Vogelperspektive erzeugen.

Sofern das Fahrzeug einen Anhänger zieht, befindet sich dieser typischerweise in einem Blickfeld wenigstens einer der Kameras des Fahrzeugs und nimmt einen Bereich innerhalb des 360°-Rundumbilds des Fahrzeugs ein. Dies führt dazu, dass beispielsweise eine in dem Heckbereich des Fahrzeugs angeordnete Kamera größtenteils lediglich einen Bereich hinter dem Fahrzeug bis zu dem Anhänger erfasst, aber nicht die unter Umständen wichtigeren Bereiche hinter dem Anhänger und seitlich (rechts und links) des Anhängers. Auf diese Weise erzeugt der Anhänger einen toten Winkelbereich in dem Rundumbild des Fahrzeugs.

Es ist die Aufgabe der vorliegenden Erfindung, ein dreidimensionales Rundumsichtsystem der eingangs genannten Art bereitzustellen, bei welchem tote Winkelbereiche zumindest reduziert werden.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Gemäß einem ersten Aspekt der Erfindung wird ein dreidimensionales Rundumsichtsystem für ein Gespann aus einem Fahrzeug und einem Anhänger bereitgestellt, wobei der Anhänger mittels einer geraden Zugstange zumindest um eine Hochachse des Fahrzeugs gelenkig an dem Fahrzeug befestigt ist.

Das Rundumsichtsystem umfasst mehrere, insbesondere vier Kameras des Fahrzeugs, mehrere, insbesondere drei Kameras des Anhängers, eine Bildverarbeitungseinheit und eine optische Ausgabeeinheit, z.B. ein Display im oder am Armaturenbrett des Fahrzeugs. Bei dem Fahrzeug handelt es sich beispielsweise um ein Kraftfahrzeug, wie Auto, Bus oder Lastkraftwagen, oder aber um ein Motorrad oder ein Fahrrad. Bei den Kameras handelt es sich bevorzugt um digitale Kameras, welche Bildaufnahmen oder Filmaufnahmen von dem Umgebungsbereich des Fahrzeugs bzw. des Anhängers machen können und die Bildaufnahmen bzw. Filmaufnahmen repräsentierende Bilddaten speichern, ausgeben und übertragen können. Die Bildverarbeitungseinheit kann auf die Bilddaten der Kameras zugreifen und im erfindungsgemäßen Sinne verarbeiten.

Die insbesondere vier Kameras des Fahrzeugs sind bezüglich eines Koordinatensystems des Fahrzeugs kalibriert, und derart an dem Fahrzeug angeordnet, dass durch Zusammenfügen von jeweils einem (insbesondere zeitgleich aufgenommenen) Bild aller vier Kameras ein dreidimensionales Fahrzeug-Rundumbild erzeugt und auf der optischen Ausgabeeinheit dargestellt werden kann, wobei ein Zugstangenbereich des Fahrzeug-Rundumbilds die Zugstange zeigt. Bei dem Koordinatensystem des Fahrzeugs kann es sich insbesondere um ein kartesisches Koordinatensystem handeln, wobei eine x-Achse die Längsrichtung, eine y-Achse die Breitenrichtung und eine z-Achse die Hochrichtung des Fahrzeugs definiert. Insbesondere können die x-Achse und die y-Achse eine Ebene aufspannen, welche parallel zu einer Fahrbahnoberfläche ist, auf welcher sich das Fahrzeug fortbewegt. Die z-Achse stellt in diesem Fall eine Fahrbahnnormale dar.

Weiterhin sind die insbesondere drei Kameras des Anhängers bezüglich eines Koordinatensystems des Anhängers kalibriert, und derart an dem Anhänger montiert, dass durch Zusammenfügen von jeweils einem (insbesondere zeitgleich aufgenommenen) Bild aller drei Kameras ein dreidimensionales Anhänger-Rundumbild erzeugt werden kann, wobei das Anhänger-Rundumbild seitliche Umgebungen des Anhängers und eine hintere Umgebung des Anhängers zeigt.

Ferner ist die Bildverarbeitungseinheit dazu eingerichtet, aus dem Zugstangenbereich des Fahrzeug-Rundumbilds einen ersten Drehwinkel α zu bestimmen, um welchen die Zugstange relativ zu dem Fahrzeug um dessen Hochachse relativ zu einer Vorausrichtung des Fahrzeugs verdreht ist. Die Hochachse des Fahrzeugs ist dabei die Hochachse des Koordinatensystems des Fahrzeugs.

Außerdem ist die Bildverarbeitungseinheit dazu eingerichtet, einen Anhängerbereich des Fahrzeug-Rundumbilds, welcher den Anhänger zeigt, in Abhängigkeit von dem ermittelten ersten Drehwinkel der Zugstange durch einen korrespondierenden Bildbereich des Anhänger-Teilrundumbilds zu ersetzen.

Der Anhängerbereich des Fahrzeug-Rundumbilds bildet einen toten Winkelbereich, welcher zwar einen Bereich hinter dem Fahrzeug bis zum Anhänger zeigt, nicht jedoch durch den Anhänger in dem Fahrzeug-Rundumbild verdeckte Objekte, welche sich hinter dem Anhänger oder auf beiden Seiten neben dem Anhänger befinden. Diese verdeckten Objekte können jedoch von den Kameras des Anhängers erfasst und in einem Bildbereich des Anhänger-Rundumbilds dargestellt werden. Der Anhängerbereich in dem Fahrzeug-Rundumbild (ohne die verdeckten Objekte) kann ersetzt werden durch den entsprechenden Bildbereich des Anhänger-Rundumbilds, wobei der Bildbereich den durch den Anhänger verdeckten Bildbereich bzw. sich darin befindliche verdeckte Objekte enthält.

Anhand des bestimmten Drehwinkels α um die Hochachse des Fahrzeugs relativ zu der Vorausrichtung des Fahrzeugs kann die Bildverarbeitungseinheit den Bildbereich des Anhänger-Rundumbilds auswählen, welcher ermöglicht, den toten Winkel zu minimieren oder zu beseitigen und einen von dem Anhänger verdeckten, durch die Kameras des Fahrzeugs nicht erfassbaren Bildbereich bzw. sich darin befindliche verdeckte Objekte in dem Fahrzeug-Rundumbild darzustellen. Mit anderen Worten kann mittels des erfindungsgemäßen Rundumsichtsystems auf der Anzeigeeinheit ein dreidimensionales Rundumbild des gesamten Gespanns dargestellt werden, wobei insbesondere die seitlichen Umgebungsbereiches des Anhängers und ein Bereich hinter dem Anhänger für den Nutzer des Rundumsichtsystems bzw. des Fahrzeugs mit dem Rundumsichtsystem einsehbar sind.

Dazu können mittels der Bildverarbeitungseinheit Koordinaten von Objekten aus dem Bildbereich des Anhänger-Rundumbilds (welche in Koordinaten bezüglich des Anhänger-Koordinatensystems vorliegen) in entsprechende Koordinaten des Fahrzeug-Koordinatensystems umgerechnet bzw. transformiert werden. Mit anderen Worten wird das Fahrzeug-Rundumbild basierend auf dem ermittelten Zugstangen-Winkel modifiziert und besteht aus einem ersten Bildbereich und aus einem zweiten Bildbereich. Der erste Bildbereich stammt dabei von den vier Kameras des Fahrzeugs, wohingegen der zweite Bildbereich von den drei Kameras des Anhängers stammt und den toten Winkelbereich der Fahrzeug-Kameras ersetzt.

Erfindungsgemäß ist vorgesehen, dass die Bildverarbeitungseinheit dazu eingerichtet ist, die von den Kameras des Fahrzeugs aufgenommen Bilder auf eine (simulierte) bewegliche, dreidimensionale erste Rückprojektionsfläche zu projizieren und die von den Kameras des Anhängers aufgenommen Bilder auf eine bewegliche, dreidimensionale zweite Rückprojektionsfläche zu projizieren. Ein Bereich der ersten Schüssel kann dann einen korrespondierenden zweiten Bereich der zweiten Schüssel ersetzen, um - wie weiter oben beschrieben - einen von dem Anhänger verdeckten, durch die insbesondere vier Kameras des Fahrzeugs nicht erfassbaren Bildbereich bzw. sich darin befindliche verdeckte Objekte in dem Fahrzeug-Rundumbild darzustellen.

Die dreidimensionale Rückprojektionsfläche ermöglicht insbesondere, dass ein Abstand zwischen dem Fahrzeug bzw. dem Anhänger und Objekten, welche das Fahrzeug und den Anhänger umgeben, mit hoher Genauigkeit auf der Anzeigeeinheit dargestellt werden kann. Dabei kann insbesondere sichergestellt werden, dass die Objekte auf der Anzeigeeinheit nicht weiter weg von dem Fahrzeug bzw. dem Anhänger erscheinen, als sie es in Wirklichkeit sind. Insbesondere kann die dreidimensionale Rückprojektionsfläche die Form einer Schale oder Schüssel aufweisen. Die Schale oder Schüssel kann beispielsweise einen ebenen, z.B. rechteckigen Boden und eine parabolische Seitenwand aufweisen.

Gemäß einer weiteren Ausführungsform ist vorgesehen, dass die Bildverarbeitungseinheit dazu eingerichtet ist, aus dem Zugstangenbereich des Fahrzeug-Rundumbilds einen zweiten Drehwinkel zu bestimmen, um welchen die Zugstange relativ zu dem Fahrzeug um dessen Breitenachse verdreht ist, und den Anhängerbereich des Fahrzeug-Rundumbilds, welcher den Anhänger zeigt, in Abhängigkeit von dem ermittelten ersten Drehwinkel und dem zweiten Drehwinkel der Zugstange durch einen korrespondierenden Bildbereich des Anhänger-Teilrundumbilds zu ersetzen. Diese Ausführungsform ermöglicht, sofern der Anhänger mittels der geraden Zugstange auch um die Breitenachse des Fahrzeugs gelenkig an dem Fahrzeug befestigt ist, dass durch vertikalen Winkelversatz zwischen Fahrzeug und Anhänger verursachte Tote Winkelbereiche des Fahrzeug-Rundumbilds durch einen korrespondierenden Bildbereich des Anhänger-Rundumbilds ersetzt werden können, z.B. bei Nickbewegungen wenn das Fahrzeug auf einer unebenen Fahrbahn fährt oder beim Fahren über Hügel oder Berge.

Weiterhin kann die Bildverarbeitungseinheit dazu eingerichtet sein, aus dem Zugstangenbereich des Fahrzeug-Rundumbilds einen dritten Drehwinkel zu bestimmen, um welchen die Zugstange relativ zu dem Fahrzeug um dessen Längsachse verdreht ist, und den Anhängerbereich des Fahrzeug-Rundumbilds, welcher den Anhänger zeigt, in Abhängigkeit von dem ermittelten ersten Drehwinkel, zweiten Drehwinkel und dritten Drehwinkel der Zugstange durch einen korrespondierenden Bildbereich des Anhänger-Teilrundumbilds zu ersetzen. Diese Ausführungsform ermöglicht, sofern der Anhänger mittels der geraden Zugstange auch um die Längsachse des Fahrzeugs gelenkig an dem Fahrzeug befestigt ist, das zusätzlich auch durch Rollbewegungen des Fahrzeugs und/oder des Anhängers verursachte Tote Winkelbereiche des Fahrzeug-Rundumbilds durch einen korrespondierenden Bildbereich des Anhänger-Rundumbilds ersetzt werden können.

Gemäß einem zweiten Aspekt der Erfindung wird ein Gespann aus einem Fahrzeug und einem Anhänger bereitgestellt, wobei der Anhänger mittels einer geraden Zugstange zumindest um eine Hochachse des Fahrzeugs gelenkig an dem Fahrzeug befestigt ist. Weiterhin kann der Anhänger auch um eine Breitenachse und um eine Längsachse des Fahrzeugs gelenkig an dem Fahrzeug befestigt sein. Das Gespann umfasst weiterhin ein dreidimensionales Rundumsichtsystem gemäß dem ersten Aspekt der Erfindung.

Im Folgenden werden Ausführungsbeispiele der Erfindung anhand der schematischen Zeichnung näher erläutert. Hierbei zeigt
- Fig. 1: eine Seitenansicht eines Kraftfahrzeugs mit einem Anhänger,
- Fig. 2: eine stark schematisierte Draufsicht auf das Fahrzeug und den Anhänger nach Fig. 1,
- Fig. 3: eine stark schematisierte Vorderansicht des Fahrzeugs nach Fig. 1,
- Fig. 4: einen Aufbau eines Ausführungsbeispiels eines erfindungsgemäßen Rundumsichtsystems.

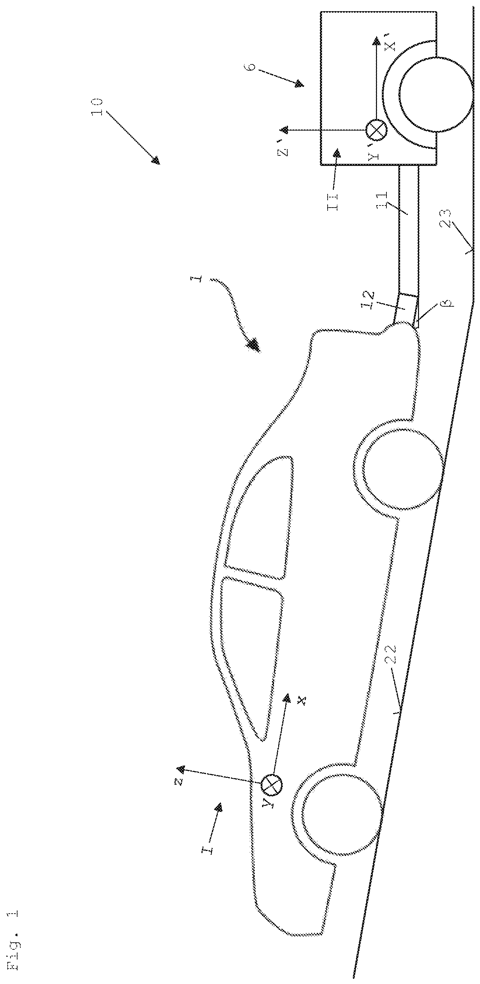

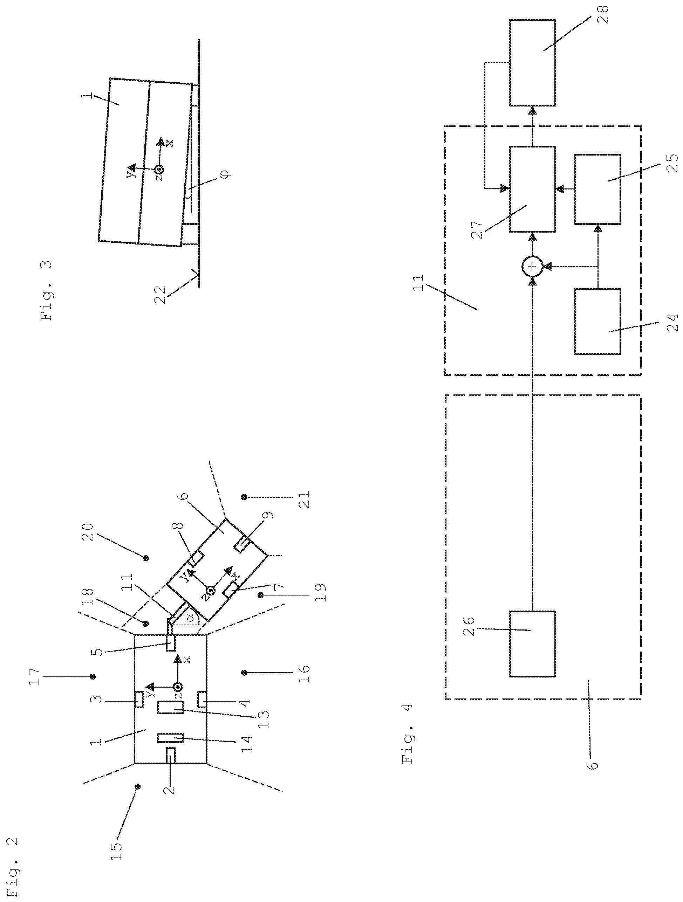

Fig. 1 bis 3 zeigen ein Fahrzeug in Form eines Kraftfahrzeugs 1. Das Kraftfahrzeug 1 weist vier Kameras 2 bis 5 auf, welche in Fig. 2 dargestellt sind. Die Kameras 2 bis 5 sind in einem kartesischen ersten Koordinatensystem I des Kraftfahrzeugs 1 kalibriert. Das Koordinatensystem I des Kraftfahrzeugs 1 umfasst eine Längsachse x, in welcher eine Vorausrichtung des Fahrzeugs 1 verläuft, eine Breitenachse y, welche quer zur Vorausrichtung des Fahrzeugs 1 orientiert ist, und eine Hochachse z des Fahrzeugs 1, welche quer bzw. normal zu einer Fahrbahnoberfläche orientiert ist, auf welcher sich das Fahrzeug 1 bewegt. Drehbewegungen des Fahrzeugs 1 um die Längsachse x werden als Rollbewegungen bezeichnet, Drehbewegungen des Fahrzeugs 1 um die y-Achse als Nickbewegungen und Drehbewegungen des Fahrzeugs 1 um die z-Achse als Gierbewegungen.

Das Kraftfahrzeug 1 zieht einen Anhänger 6 mit weiteren drei Kameras 7 bis 9, welche ebenfalls in Fig. 2 dargestellt sind. Zusammen bilden das Kraftfahrzeug 1 und der Anhänger 6 ein Gespann 10. Die Kameras 7 bis 9 sind in einem kartesischen zweiten Koordinatensystem II des Anhängers 6 kalibriert. Das Koordinatensystem II des Anhängers 6 umfasst eine Längsachse x', eine Breitenachse y' und eine Hochachse z' des Anhängers 6. Der Anhänger 6 ist mittels einer geraden Zugstange 11 an einer Anhängerkupplung 12 des Fahrzeugs 1 befestigt, wobei der Anhänger 6 um alle drei Achsen x, y und z des Fahrzeugs 1 verschwenkbar bzw. drehbar gelagert ist.

Fig. 2 zeigt wie die vier Kameras 2 bis 5 des Fahrzeugs 1 und die drei Kameras 7 bis 9 des Anhängers 6 angeordnet sein können. Das Fahrzeug 1 umfasst dabei eine erste Kamera 2, eine zweite Kamera **3,** eine dritte Kamera 4 und eine vierte Kamera 5. Der Anhänger 6 umfasst eine fünfte Kamera 7, eine sechste Kamera 8 und eine siebte Kamera 9. Weiterhin sind mögliche Blickfelder der Kameras 2 bis 5 und 7 bis 9 gezeigt. Weiterhin sind innerhalb des Fahrzeugs 1 eine Bildverarbeitungseinheit 13 und eine optische Ausgabeeinheit in Form eines Monitors 14 angeordnet, wobei sich der Monitor 14 im Blickfeld eines Fahrers des Fahrzeugs 1 befindet.

In dem durch Fig. 2 gezeigten Ausführungsbeispiel ist die erste Kamera 2 in einem vorderen Bereich des Fahrzeugs 1 angeordnet und erfasst ein im Wesentlichen vorderes Blickfeld 15 in einer näheren Umgebung des Fahrzeugs 1. Die zweite Kamera 3 und die dritte Kamera 4 sind jeweils in einem seitlich äußeren Bereich des Fahrzeugs 1 angeordnet und erfassen jeweils ein im Wesentlichen seitliches Blickfeld 16 bzw. 17 in der näheren Umgebung des Fahrzeugs 1. Die dritte Kamera 5 ist in einem hinteren Bereich des Fahrzeugs 1 angeordnet und erfasst ein im Wesentlichen hinteres Blickfeld 18 in der näheren Umgebung des Fahrzeugs 1. Die vier Blickfelder 15 bis 18 der vier Kameras 2 bis 5 decken gemeinsam den gesamten Umfang (360°) des Fahrzeugs 1 ab.

Die 4 Kameras 2 bis 5 des Fahrzeugs 1 können zeitgleich Bildaufnahmen machen, welche zu einem dreidimensionalen Fahrzeug-Rundumbild zusammengefügt und auf dem Monitor 14 angezeigt werden können. Die Zugstange 11 des Anhängers 6 befindet sich in dem hinteren Blickfeld 18 der vierten Kamera 5 des Fahrzeugs 1. Die Zugstange 11 befindet sich somit innerhalb von Bildern, welche von der vierten Kamera 5 des Fahrzeugs 1 aufgenommen werden. Ein Bildbereich dieser Bilder der vierten Kamera, welche die Zugstange 11 enthalten, wird im Folgenden mit dem Begriff "Zugstangenbereich" bezeichnet. Die Bildverarbeitungseinheit 13 bestimmt aus dem Zugstangenbereich einen ersten Drehwinkel α, um welchen die Zugstange 11 relativ zu dem Fahrzeug 1 um dessen Hochachse z verdreht ist.

Die Bildverarbeitungseinheit 13 bestimmt weiterhin aus dem Zugstangenbereich einen zweiten Drehwinkel β, um welchen die Zugstange 11 relativ zu dem Fahrzeug 1 um dessen Breitenachse y verdreht ist. Diese relative Verdrehung der Zugstange 11 kommt in dem durch Fig. 1 gezeigten Beispiel dadurch zustande, dass sich das Fahrzeug 1 auf einem ersten Straßenabschnitt 22 befindet, welcher gegenüber einem zweiten Straßenabschnitt 23 geneigt ist, auf welchem sich der Anhänger 6 befindet (Fig. 1).

Ferner bestimmt die Bildverarbeitungseinheit 13 einen dritten Drehwinkel φ, um welchen die Zugstange 11 relativ zu dem Fahrzeug 1 um dessen Längsachse x verdreht ist. Fig. 3 zeigt diesbezüglich - zur Verdeutlichung in einer stark übertriebenen Weise - das Fahrzeug nach Fig. 1, welches sich auf dem ersten Straßenabschnitt 22 befindet und dabei eine Rollbewegung um die Längsachse x ausführt, wobei ein Rollwinkel φ in dem gezeigten Beispiel dem dritten Drehwinkel φ entspricht.

Die fünfte Kamera 7 und die sechste Kamera 8 sind jeweils in einem seitlich äußeren Bereich des Anhängers 6 angeordnet und erfassen jeweils ein im Wesentlichen seitliches und vorderes Blickfeld 19 bzw. 20 in einer näheren Umgebung des Anhängers 6. Die siebte Kamera 9 ist in einem hinteren Bereich des Anhängers 6 angeordnet und erfasst ein im Wesentlichen hinteres Blickfeld 21 in der näheren Umgebung des Anhängers 6. Seitliche Begrenzungen der Blickfelder 15 bis 18 und 19 bis 21 sind in Fig. 2 jeweils mit gestrichelten Linien angedeutet. Die drei Kameras 7 bis 9 des Anhängers 6 können zeitgleich Bildaufnahmen machen, welche zu einem dreidimensionalen Anhänger-Rundumbild zusammengefügt werden können, wobei das Anhänger Rundumbild die seitlichen Umgebungen des Anhängers 6 und eine hintere Umgebung des Anhängers 6 zeigt.

Das dreidimensionale Fahrzeug-Rundumbild entsteht, indem die Bildverarbeitungseinheit 13 jeweils vier zeitgleich von den vier Kameras 2 bis 5 des Fahrzeugs 1 aufgenommene Bilder auf eine bewegliche dreidimensionale Rückprojektionsfläche in Form einer Schale bzw. Schüssel projiziert. Auf ähnliche Weise entsteht das dreidimensionale Anhänger-Rundumbild, indem die Bildverarbeitungseinheit 13 jeweils vier zeitgleich von den drei Kameras 7 bis 9 des Anhängers 6 aufgenommene Bilder auf eine bewegliche dreidimensionale Rückprojektionsfläche in Form einer Schale bzw. Schüssel projiziert.

Nicht bloß die Zugstange 11 des Anhängers befindet sich in Bildern, welche von der vierten Kamera 5 aufgenommen werden, sondern der gesamte Anhänger 6. Ein Bildbereich dieser Bilder der vierten Kamera 5, welcher den gesamten Anhänger 6 enthält, wird im Folgenden mit dem Begriff "Anhängerbereich" bezeichnet.

Der Anhängerbereich bildet einen toten Winkelbereich, welcher zwar einen Bereich hinter dem Fahrzeug bis zum Anhänger zeigt, nicht jedoch durch den Anhänger 6 in dem Fahrzeug-Rundumbild verdeckte Objekte, welche sich hinter dem Anhänger 6 oder auf beiden Seiten neben dem Anhänger 6 befinden. Diese verdeckten Objekte werden jedoch von den drei Kameras 7 bis 9 des Anhängers 6 erfasst und in einem Bildbereich des Anhänger-Rundumbilds dargestellt. Die Bildbearbeitungseinheit 13 ersetzt den Anhängerbereich in dem Fahrzeug-Rundumbild durch den korrespondierenden Bildbereich des Anhänger-Rundumbilds, wobei der Bildbereich des Anhängers-Rundumbilds den durch den Anhänger 6 verdeckten Bildbereich bzw. die sich darin befindlichen verdeckte Objekte enthält.

Anhand der bestimmten Drehwinkel α, β und φ wählt die Bildverarbeitungseinheit 13 den entsprechenden Bildbereich des Anhänger-Rundumbilds aus, welcher den von dem Anhänger verdeckten, durch die vier Kameras 2 bis 5 des Fahrzeugs 1 nicht erfassbaren Bildbereich enthält. Dazu transformiert die Bildbearbeitungseinheit 13 Koordinaten von Objekten aus dem Bildbereich des Anhänger-Rundumbilds (welche in Koordinaten bezüglich des Anhänger-Koordinatensystems II vorliegen) in entsprechende Koordinaten des Fahrzeug-Koordinatensystems I.

Fig. 4 zeigt, wie das dreidimensionale Rundumsichtsystem arbeiten bzw. betrieben werden kann. Aus den Bildern 24 der 4 Kameras 2 bis 5 des Fahrzeugs 1 kann - wie weiter oben im Zusammenhang mit Fig. 1 bis 3 beschrieben - der Winkel α und (optional) auch die Winkel β und β der Zugstange 11 des Anhängers 6 relativ zum Fahrzeug 1 berechnet werden (verdeutlicht durch den Block 25) . Weiterhin können jeweils vier Bilder 24 der 4 Kameras 2 bis 5 des Fahrzeugs 1 mit jeweils drei Bildern 26 der 3 Kameras 7 bis 9 des Anhängers 6 kombiniert werden (verdeutlicht durch das "+"-Symbol) , was mittels der Bildbearbeitungseinheit 13 erfolgt.

Aus den insgesamt jeweils sieben Bildern (vier Bilder von den vier Kameras 2 bis 5 des Fahrzeugs 1 und drei Bilder von den drei Kameras 7 bis 9 des Anhängers 6) und dem bestimmten Winkel α (und optional zusätzlich dem bestimmten Winkel β und/oder dem bestimmten Winkel φ) rendert die Bildbearbeitungseinheit 13 das dreidimensionale Fahrzeug-Rundumbild wie weiter oben im Zusammenhang mit Fig. 1 bis 3 beschrieben (verdeutlicht durch den Block 27). Dabei wird das dreidimensionale Fahrzeug-Rundumbild auf einem Monitor 14 dargestellt, welcher Teil eines Human Machine Interfaces 28 sein kann, über welches weiterhin eine gewünschte virtuelle Perspektive (in deren Abhängigkeit das Rendern erfolgt) für das dreidimensionale Fahrzeug-Rundumbild gewählt werden kann.

## Patentansprüche

1. Dreidimensionales Rundumsichtsystem für ein Gespann (10) aus einem Fahrzeug (1) und einem Anhänger (6), wobei der Anhänger (6) mittels einer geraden Zugstange (11) zumindest um eine Hochachse (z) des Fahrzeugs (1) gelenkig an dem Fahrzeug (1) befestigt ist, das Rundumsichtsystem umfassend:
- mehrere Kameras (2 bis 5) des Fahrzeugs (1),
- mehrere Kameras (7 bis 9) des Anhängers (6),
- eine Bildverarbeitungseinheit (13) und
- eine optische Ausgabeeinheit (14),
wobei
- die Kameras (2 bis 5) des Fahrzeugs (1) bezüglich eines Koordinatensystems (I) des Fahrzeugs (1) kalibriert sind, und derart an dem Fahrzeug (1) angeordnet sind, dass durch Zusammenfügen von jeweils einem Bild aller Kameras (2 bis 5) ein dreidimensionales Fahrzeug-Rundumbild erzeugt und auf der optischen Ausgabeeinheit (14) dargestellt werden kann, wobei ein Zugstangenbereich des Fahrzeug-Rundumbilds die Zugstange (11) zeigt,
- die Kameras (7 bis 9) des Anhängers (6) bezüglich eines Koordinatensystems (II) des Anhängers (6) kalibriert sind, und derart an dem Anhänger (6) montiert sind, dass durch Zusammenfügen von jeweils einem Bild aller Kameras (7 bis 9) ein dreidimensionales Anhänger-Rundumbild erzeugt werden kann,
wobei das Anhänger-Rundumbild seitliche Umgebungen des Anhängers (6) und eine hintere Umgebung des Anhängers (6) zeigt,
wobei die Bildverarbeitungseinheit (13) dazu eingerichtet ist,
- aus dem Zugstangenbereich des Fahrzeug-Rundumbilds einen ersten Drehwinkel (α) zu bestimmen, um welchen die Zugstange (11) relativ zu dem Fahrzeug (1) um dessen Hochachse (z) relativ zu einer Vorausrichtung (x) des Fahrzeugs (1) verdreht ist, und
- einen Anhängerbereich des Fahrzeug-Rundumbilds, welcher den Anhänger (6) zeigt, in Abhängigkeit von dem ermittelten ersten Drehwinkel (α) der Zugstange (11) durch einen korrespondierenden Bildbereich des Anhänger-Teilrundumbilds zu ersetzen, **dadurch gekennzeichnet, dass** die Bildverarbeitungseinheit (13) dazu eingerichtet ist, die von den Kameras (2 bis 5) des Fahrzeugs (1) aufgenommenen Bilder auf eine bewegliche, dreidimensionale erste Rückprojektionsfläche zu projizieren und die von den Kameras (7 bis 9) des Anhängers (6) aufgenommen Bilder auf eine bewegliche, dreidimensionale zweite Rückprojektionsfläche zu projizieren.

2. Dreidimensionales Rundumsichtsystem nach Anspruch 1, wobei die dreidimensionale Rückprojektionsfläche die Form einer Schale aufweist.

3. Dreidimensionales Rundumsichtsystem nach einem der vorstehenden Ansprüche 1 oder 2, wobei die Bildverarbeitungseinheit (13) dazu eingerichtet ist,
- aus dem Zugstangenbereich des Fahrzeug-Rundumbilds einen zweiten Drehwinkel (β) zu bestimmen, um welchen die Zugstange (11) relativ zu dem Fahrzeug (1) um dessen Breitenachse (y) verdreht ist, und
- den Anhängerbereich des Fahrzeug-Rundumbilds, welcher den Anhänger (6) zeigt, in Abhängigkeit von dem ermittelten ersten Drehwinkel (α) und dem zweiten Drehwinkel (β) der Zugstange (11) durch einen korrespondierenden Bildbereich des Anhänger-Teilrundumbilds zu ersetzen.

4. Dreidimensionales Rundumsichtsystem nach einem der vorstehenden Ansprüche, wobei die Bildverarbeitungseinheit (13) dazu eingerichtet ist,
- aus dem Zugstangenbereich des Fahrzeug-Rundumbilds einen dritten Drehwinkel (φ) zu bestimmen, um welchen die Zugstange (11) relativ zu dem Fahrzeug (1) um dessen Längsachse (x) verdreht ist, und
- den Anhängerbereich des Fahrzeug-Rundumbilds, welcher den Anhänger (6) zeigt, in Abhängigkeit von dem ermittelten ersten Drehwinkel (α), zweiten Drehwinkel (β) und dritten Drehwinkel (φ) der Zugstange (11) durch einen korrespondierenden Bildbereich des Anhänger-Teilrundumbilds zu ersetzen.

5. Gespann (10) aus einem Fahrzeug (1) und einem Anhänger (6), wobei der Anhänger (6) mittels einer geraden Zugstange (11) um zumindest eine Hochachse (z) des Fahrzeugs (1) gelenkig an dem Fahrzeug (1) befestigt ist, das Gespann (10) umfassend ein dreidimensionales Rundumsichtsystem nach einem der vorstehend Ansprüche.

## Claims

1. Three-dimensional surround-view system for a combination (10) composed of a vehicle (1) and a trailer (6), wherein the trailer (6) is fixed to the vehicle (1) by means of a straight drawbar (11) in an articulated manner at least about a vertical axis (z) of the vehicle (1), the surround-view system comprising:
- a plurality of cameras (2 to 5) of the vehicle (1),
- a plurality of cameras (7 to 9) of the trailer (6),
- an image processing unit (13) and
- an optical output unit (14),
wherein
- the cameras (2 to 5) of the vehicle (1) are calibrated with respect to a coordinate system (I) of the vehicle (1), and are arranged on the vehicle (1) in such a way that a three-dimensional vehicle all-round image can be generated by stitching together one image each from all the cameras (2 to 5) and can be displayed on the optical output unit (14), wherein a drawbar region of the vehicle all-round image shows the drawbar (11),
- the cameras (7 to 9) of the trailer (6) are calibrated with respect to a coordinate system (II) of the trailer (6), and are mounted on the trailer (6) in such a way that a three-dimensional trailer all-round image can be generated by stitching together one image each from all the cameras (7 to 9), wherein the trailer all-round image shows lateral surroundings of the trailer (6) and a surrounding area to the rear of the trailer (6), wherein the image processing unit (13) is configured
- to determine from the drawbar region of the vehicle all-round image a first angle of rotation (α), by which the drawbar (11) is rotated relative to the vehicle (1) about the vertical axis (z) thereof relative to a forwards direction (x) of the vehicle (1),
and
- to replace a trailer region of the vehicle all-round image showing the trailer (6) with a corresponding image region of the trailer partial all-round image depending on the determined first angle of rotation (α) of the drawbar (11), **characterized in that** the image processing unit (13) is configured to project the images recorded by the cameras (2 to 5) of the vehicle (1) onto a movable, three-dimensional first back projection surface and to project the images recorded by the cameras (7 to 9) of the trailer (6) onto a movable, three-dimensional second back projection surface.

2. Three-dimensional surround-view system according to Claim 1, wherein the three-dimensional back projection surface has the shape of a dish.

3. Three-dimensional surround-view system according to either of the preceding Claims 1 and 2, wherein the image processing unit (13) is configured
- to determine from the drawbar region of the vehicle all-round image a second angle of rotation (β), by which the drawbar (11) is rotated relative to the vehicle (1) about the width axis (y) thereof, and
- to replace the trailer region of the vehicle all-round image showing the trailer (6) with a corresponding image region of the trailer partial all-round image depending on the determined first angle of rotation (α) and the second angle of rotation (β) of the drawbar (11).

4. Three-dimensional surround-view system according to any of the preceding claims, wherein the image processing unit (13) is configured
- to determine from the drawbar region of the vehicle all-round image a third angle of rotation (φ), by which the drawbar (11) is rotated relative to the vehicle (1) about the longitudinal axis (x) thereof, and
- to replace the trailer region of the vehicle all-round image showing the trailer (6) with a corresponding image region of the trailer partial all-round image depending on the determined first angle of rotation (α), second angle of rotation (β) and third angle of rotation (φ) of the drawbar (11).

5. Combination (10) composed of a vehicle (1) and a trailer (6), wherein the trailer (6) is fixed to the vehicle (1) by means of a straight drawbar (11) in an articulated manner about at least a vertical axis (z) of the vehicle (1), the combination (10) comprising a three-dimensional surround-view system according to any of the preceding claims.

## Revendications

1. Système de vision panoramique tridimensionnel pour un ensemble (10) composé d'un véhicule (1) et d'une remorque (6), la remorque (6) étant fixée de manière articulée au véhicule (1) au moyen d'une barre de traction droite (11), au moins autour d'un axe vertical (z) du véhicule (1), le système de vision panoramique comprenant :
- plusieurs caméras (2 à 5) du véhicule (1),
- plusieurs caméras (7 à 9) de la remorque (6),
- une unité (13) de traitement d'images, et
- une unité (14) de sortie optique,
dans lequel
- les caméras (2 à 5) du véhicule (1) sont calibrées par rapport à un système de coordonnées (I) du véhicule (1) et sont agencées sur le véhicule (1) de telle sorte qu'en assemblant une image de chacune des caméras (2 à 5), une image tridimensionnelle panoramique du véhicule puisse être générée et affichée sur l'unité (14) de sortie optique, une zone de barre d'attelage de l'image panoramique du véhicule montrant la barre d'attelage (11),
- les caméras (7 à 9) de la remorque (6) sont calibrées par rapport à un système de coordonnées (II) de la remorque (6) et montées sur la remorque (6) de telle sorte qu'en assemblant une image de chacune des caméras (7 à 9), on puisse générer une image panoramique tridimensionnelle de la remorque, l'image panoramique de la remorque montrant les environnements latéraux de la remorque (6) et un environnement arrière de la remorque (6), l'unité (13) de traitement d'images étant conçue pour
- à partir de la zone de barre de traction de l'image panoramique du véhicule, déterminer un premier angle de rotation (α) selon lequel la barre de traction (11) est tournée par rapport au véhicule (1) autour de son axe vertical (z) par rapport à une orientation initiale (x) du véhicule (1), et
- remplacer une zone de remorque de l'image panoramique du véhicule, qui montre la remorque (6), en fonction du premier angle de rotation (α) déterminé de la barre d'attelage (11) par une zone d'image correspondante de l'image panoramique partielle de la remorque, **caractérisé en ce que** l'unité (13) de traitement d'images est conçue pour projeter les images enregistrées par les caméras (2 à 5) du véhicule (1) sur une première surface de rétroprojection mobile en trois dimensions, et pour projeter les images enregistrées par les caméras (7 à 9) de la remorque (6) sur une deuxième surface de rétroprojection mobile en trois dimensions.

2. Système de vision panoramique tridimensionnel selon la revendication 1, dans lequel la surface de rétroprojection tridimensionnelle a la forme d'une coupelle.

3. Système de vision panoramique tridimensionnel selon l'une des revendications 1 ou 2 précédentes, dans lequel l'unité (13) de traitement d'images est conçue pour
- déterminer, à partir de la zone de barre de traction de l'image panoramique du véhicule, un deuxième angle de rotation (β) autour duquel la barre de traction (11) est tournée par rapport au véhicule (1) autour de son axe transversal (y), et
- remplacer la zone de remorque de l'image panoramique du véhicule, qui montre la remorque (6), en fonction du premier angle de rotation (α) déterminé et du deuxième angle de rotation (β) de la barre de traction (11) par une zone d'image correspondante de l'image panoramique partielle de la remorque.

4. Système de vision panoramique tridimensionnel selon l'une des revendications précédentes, dans lequel l'unité (13) de traitement d'images est conçue pour
- déterminer, à partir de la zone de barre de traction de l'image panoramique du véhicule, un troisième angle de rotation (φ) autour duquel la barre de traction (11) est tournée par rapport au véhicule (1) autour de son axe longitudinal (x), et
- remplacer la zone de remorque de l'image panoramique du véhicule, qui montre la remorque (6), en fonction du premier angle de rotation (α), du deuxième angle de rotation (β) et du troisième angle de rotation (φ) déterminés de la barre d'attelage (11) par une zone d'image correspondante de l'image panoramique partielle de la remorque.

5. Ensemble (10) composé d'un véhicule (1) et d'une remorque (6), la remorque (6) étant fixée de manière articulée au véhicule (1) au moyen d'une barre d'attelage droite (11) autour d'au moins un axe vertical (z) du véhicule (1), l'ensemble (10) comprenant un système de vision panoramique tridimensionnel selon l'une des revendications précédentes.
